(19) Europäisches Patentamt
European Patent Office
Office européen des brevets

(11) Veröffentlichungsnummer: **0 438 068 B1**

(12) **EUROPÄISCHE PATENTSCHRIFT**

(45) Veröffentlichungstag der Patentschrift: **14.06.95**

(51) Int. Cl.[6]: **C08F 297/02**, C08F 297/08

(21) Anmeldenummer: **91100185.7**

(22) Anmeldetag: **08.01.91**

# (54) Verfahren zur Herstellung vo Propylen-Ethylen-Copolymerisaten.

(30) Priorität: **17.01.90 DE 4001157**
**19.06.90 DE 4019453**

(43) Veröffentlichungstag der Anmeldung:
**24.07.91 Patentblatt 91/30**

(45) Bekanntmachung des Hinweises auf die Patenterteilung:
**14.06.95 Patentblatt 95/24**

(84) Benannte Vertragsstaaten:
**AT BE DE ES FR GB IT NL**

(56) Entgegenhaltungen:
**EP-A- 0 119 963**
**EP-A- 0 174 863**

**CHEMICAL ABSTRACTS, Band 102, Nr. 20, Mai 1985, Seite 40, Zusammenfassung Nr. 167701r, Columbus, Ohio, US; & JP- A-59 227 913**

(73) Patentinhaber: **BASF Aktiengesellschaft**
**Carl-Bosch-Strasse 38**
**D-67063 Ludwigshafen (DE)**

(72) Erfinder: **Schwager, Harald, Dr.**
**Ziegelofenweg 7**
**W-6720 Speyer (DE)**
Erfinder: **Kerth, Juergen, Dr.**
**Wattenheimer Strasse 15**
**W-6719 Carlsberg (DE)**
Erfinder: **Zolk, Ralf, Dr.**
**Weinbietstrasse 7**
**W-6714 Weisenheim (DE)**
Erfinder: **Koelle, Peter, Dr.**
**An der Froschlache 19**
**W-6700 Ludwigshafen (DE)**
Erfinder: **Werner, Rainer Alexander, Dr.**
**Salinenstrasse 143**
**W-6702 Bad Duerkheim (DE)**

EP 0 438 068 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Propylen-Ethylen-Copolymerisaten, erhältlich durch zweistufige Polymerisation aus der Gasphase heraus in einem bewegten Festbett, mittels eines Ziegler-Natta-Katalysatorsystems, das neben einer titanhaltigen Feststoffkomponente, welche einen feinteiligen Träger der Formel $SiO_2 \cdot aAl_2O_3$ aufweist, wobei a für einen Wert von 0 bis 2 steht, noch als Cokatalysator eine Aluminiumverbindung enthält, wobei man

in einer ersten Polymerisationsstufe bei einem Druck von 20 bis 40 bar, einer Temperatur von 60 bis 90 °C und einer mittleren Verweilzeit des Reaktionsgemisches von 1 bis 5 Stunden Propylen polymerisiert, dabei pro mmol der Aluminiumverbindung 0,05 bis 2 kg Polypropylen erzeugt und anschließend

in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat ein Gemisch aus Propylen und Ethylen hinzupolymerisiert, dabei das Verhältnis der Partialdrücke zwischen Propylen und Ethylen im Bereich von 0,5 : 1 bis 5 : 1 einstellt und

die Polymerisation in der zweiten Polymerisationsstufe in Gegenwart eines $C_1$-$C_8$-Alkanols vornimmt, wobei das Gewichtsverhältnis zwischen den in der ersten und den in der zweiten Polymerisationsstufe umgesetzten Monomeren 1 : 1 bis 20 : 1 beträgt.

Folien und Formkörpern aus diesen Copolymerisaten.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von $\alpha$-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200) .

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945), bei denen man zunächst gasförmiges Propylen in einer ersten Reaktionsstufe polymerisiert und das daraus erhältliche Homopolymerisat anschließend in eine zweite Reaktionsstufe bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber auch eine im Vergleich zu reinem Polypropylen deutlich verminderte Steifigkeit auf. Für einige Anwendungsbereiche werden aber vorwiegend Copolymerisate benötigt, welche neben einer für praktische Zwecke ausreichend guten Schlagzähigkeit auch eine hohe Steifigkeit aufweisen. Außerdem enthalten die Copolymerisate oft noch Katalysatorreste, insbesondere Titan und Chlor, was ihre Anwendbarkeit u.a. im Lebensmittel- und Hygienebereich einschränkt. Um eine gute Verarbeitbarkeit der erhaltenen Propylen-Ethylen-Copolymerisate in Extrudern zu gewährleisten, ist es außerdem notwendig, deren Schüttdichte auf einen möglichst hohen Wert einzustellen.

In der EP-A 0174 863 wird ein Herstellungsverfahren für Propylen-Ethylen-Copolymerisate offenbart, nach welchem zunächst in einer ersten Stufe Polypropylen erhalten wird, welchem man anschließend in einer zweiten Stufe ein Gemisch aus Propylen und einem anderen Alk-1-en hinzupolymerisiert.

Die Herstellung von Propylen-Ethylen-Blockcopolymeren mit Hilfe eines Ziegler-Natta-Katalysatorsystems wird auch in der älteren Anmeldung DE-3827565.1 beschrieben. Dort stellt man zunächst in einer ersten Polymerisationsstufe ein Propylennomopolymerisat her und polymerisiert diesem anschließend in einer zweiten Polymerisationsstufe ein Gemisch aus Propylen und Ethylen hinzu. Die dabei erhältlichen Polymerisate weisen neben einer hohen Kerbschlagzähigkeit eine günstige Kornverteilung und sehr niedrige Gehalte an unerwünschten Katalysatorresten, insbesondere an Titan und Chlor, auf. Wegen der relativ hohen Anteile an, im zweiten Polymerisationssystem gebildeten, Propylen-Ethylen-Copolymerisaten ist jedoch bei diesen Polymerisaten die Rieselfähigkeit für einige Anwendungsgebiete nicht ausreichend hoch.

Der vorliegenden Erfindung lag daher die Aufgabe zugrunde, den geschilderten Nachteilen abzuhelfen und ein verfahren zur Herstellung von Copolymerisaten des Propylens mit verbesserten anwendungstechnischen Eigenschaften zu entwickeln.

Demgemäß wurde das eingangs definierte Verfahren zur Herstellung von Propylen-Ethylen-Copolymerisaten gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden.

Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Erfindungsgemäß enthält die titanhaltige Feststoffkomponente einen feinteiligen Träger, wofür sich Silicium- und Aluminiumoxide, sowie Aluminiumsilicate gut bewährt haben. Als Träger wird $SiO_2 \cdot aAl_2O_3$ verwendet, wobei a für einen Wert von 0 bis 2, insbesondere von 0 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

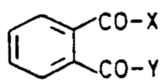

I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt folgendes dreistufige Verfahren angewandt:
In der ersten Stufe versetzt man zunächst einen feinteiligen Träger, bevorzugt $SiO_2 \cdot aAl_2O_3$ - wobei a für eine Zahl im Bereich von 0 bis 2, insbesondere im Bereich von 0 bis 0,5 steht - der in der Regel einen Teilchendurchmesser von 0,1 bis 1000 $\mu$m, insbesondere von 10 bis 300 $\mu$m, ein Porenvolumen von 0,1 bis 10 $cm^3/g$, insbesondere von 1,0 bis 4,0 $cm^3/g$, und eine spezifische Oberfläche von 10 bis 1000 $m^2/g$, insbesondere von 100 bis 500 $m^2/g$, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder

vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$$R^1_nSi(OR^2)_{4-n} \qquad II.$$

wobei
$R^1$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe, $R^2$ eine $C_1$- bis $C_{20}$-Alkylgruppe bedeutet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, sowie $R^2$ eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die Polymerisation des Propylens wird in der ersten Polymerisationsstufe bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und Ethylen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80 °C und die mittlere Verweilzeit des Polymerisats beträgt 1 bis 5 Stunden, bevorzugt 1,5 bis 4 Stunden.

Erfindungsgemäß wird die Temperatur in der zweiten Polymerisationsstufe auf Werte von 30 bis 100 °C eingestellt. Wählt man innerhalb dieses Bereichs Temperaturen von 70 bis 100 °C, insbesondere von 70 bis 85 °C für die zweite Polymerisationsstufe aus, so erhält man Copolymerisate, die neben einer hohen

Steifigkeit, einer den praktischen Anforderungen genügenden Kerbschlagzähigkeit, einer hohen Schüttdichte insbesondere auch eine deutlich verringerte Neigung zum Weißbruch aufweisen. Unter Weißbruch versteht man dabei die an vielen Kunststoffen während der Verstreckung auftretende Weißfärbung der vorher transparenten Probe in einzelnen Bereichen.

In der zweiten Polymerisationsstufe liegt das Verhältnis der Partialdrücke zwischen Propylen und Ethylen im Bereich von 0,5 : 1 bis 5 : 1, insbesondere im Bereich von 1 : 1 bis 4 : 1.

In dem erfindungsgemäßen Verfahren fügt man dem Reaktionsgemisch der zweiten Polymerisationsstufe ein $C_1$- bis $C_8$-Alkanol, insbesondere ein $C_1$-$C_4$-Alkanol, hinzu, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten $C_1$- $C_8$-Alkanols wird dabei zweckmäßigerweise so bemessen, daß das Molverhältnis zwischen der Aluminiumverbindung und dem $C_1$-$C_8$-Alkanol 0,1:1 bis 10:1, insbesondere 0,2:1 bis 5:1 beträgt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 1 : 1 bis 20 : 1, insbesondere 1,5 : 1 bis 15 : 1, beträgt.

Das Molekulargewicht der dabei erhältlichen Polymerisate kann wie üblich durch Zugabe von Reglern, insbesondere von Wasserstoff kontrolliert werden.

Die nach dem erfindungsgemäßen Verfahren erhaltenen Copolymerisate enthalten neben Blöcken von Polypropylen Blöcke von Propylen-Ethylen-Copolymerisaten mit statistischer Monomerverteilung. Diese Copolymerisate weisen mittlere Molmassen von 10 000 bis 500 000 und Schmelzflußindices von 0,1 bis 100 g/10 min, vorzugsweise von 0,2 bis 10 g/10 min auf, jeweils gemessen nach DIN 53 735 bei 230 °C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Die erfindungsgemäßen Copolymerisate weisen eine ausgezeichnete Steifigkeit, eine verbesserte Rieselfähigkeit, eine den praktischen Anforderungen genügende Kerbschlagzähigkeit und eine erhöhte Schüttdichte auf. Sie enthalten nur geringe Mengen an Katalysatorbestandteilen.

Aufgrund ihrer guten mechanischen Eigenschaften eignen sich solche Copolymerisate insbesondere zur Herstellung von Folien, Rohren, Belägen, Fasern, Hohlkörpern, Spritzgußartikeln und von Formteilen für den Fahrzeugbau.

Beispiel 1

Die Herstellung der Propylen-Ethylen-Copolymerisate erfolgte in zwei hintereinander geschalteten Rührautoklaven mit einem Nutzvolumen von jeweils 180 l in Anwesenheit von Wasserstoff als Molekulargewichtsregler. Beide Reaktoren enthielten ein bewegtes Festbett aus feinteiligem Polypropylen.

In den ersten Polymerisationsreaktor wurde bei einem Druck von 28 bar und einer Temperatur von 70 °C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug 3 Stunden. Bei diesem Verfahren wurden pro mmol der Aluminiumverbindung 0,4 kg Polypropylen erzeugt. Die titanhaltige Feststoffkomponente wurde nach folgendem Verfahren hergestellt.

Dazu versetzte man in einer ersten Stufe $SiO_2$, welches einen Teilchendurchmesser von 20 bis 45 $\mu$m, ein Porenvolumen von 1,75 $cm^3$/g und eine Oberfläche von 320 $m^2$/g aufwies, mit in n-Heptan gelöstem Butyl-octylmagnesium, wobei pro Mol $SiO_2$ 0,3 mol der Magnesiumverbindung eingesetzt wurden. Die Lösung wurde 1,5 Stunden lang bei 90 °C gerührt, danach auf 20 °C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80 °C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 °C mit einer 15 gewichtsprozentigen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachorid enthielt.

Die daraus resultierende titanhaltige Feststoffkomponente enthielt 3,1 Gew.-% Titan, 7,5 Gew.-% Magnesium und 28,3 Gew.-% Chlor.

Das im ersten Reaktor gebildete Polypropylen wurde zusammen mit dem Katalysator in den zweiten Rührautoklaven übergeführt und dort dem Polymerisat bei einem Gesamtdruck von 11 bar, einer Temperatur von 50 °C und einer mittleren Verweilzeit von 2,4 Stunden in Anwesenheit von 54 mmol Isopropanol ein Gemisch von Propylen und Ethylen hinzupolymerisiert. Das Verhältnis der Partialdrücke zwischen Propylen und Ethylen betrug dabei 2, 33:1. Das Gewichtsverhältnis zwischen dem im ersten Reaktor gebildeten Polypropylen und dem im zweiten Reaktor entstandenen Copolymerisat lag bei 4:1. Bei der Polymerisation wurden im zweiten Reaktor pro mmol der Aluminiumkomponente 0,9 mmol Isopropanol verwendet.

Dabei erhielt man ein Propylen-Ethylen-Copolymerisat mit einem Schmelzflußindex von 2,5 g/10 min, bei 230 °C und 2,16 kg (nach DIN 53 735). Die entsprechenden mechanischen Eigenschaften und die Kornverteilung des entstandenen Copolymerisats sind der nachstehenden Tabelle zu entnehmen. Der Titangehalt im erfindungsgemäßen Copolymerisat betrug 2 ppm, der von Magnesium 3,5 ppm und der von Chlor 10 ppm.

Beispiel 2

Entsprechend Beispiel 1 wurden mit Hilfe eines Ziegler-Natta-Katalysatorsystems Propylen und Ethylen polymerisiert, jedoch pro mmol der Aluminiumkomponente 1,2 mmol Isopropanol verwendet. Das Verhältnis der Partialdrücke zwischen Propylen und Ethylen betrug dabei 3 : 1. Das Gewichtsverhältnis zwischen dem im ersten Reaktor gebildeten Polypropylen und dem im zweiten Reaktor entstandenen Copolymerisat lag bei 10 : 1.

Dabei erhielt man ein Propylen-Ethylen-Copolymerisat mit einem Schmelzindex von 3,4 g/10 min, bei 230 °C und 2,16 kg (nach DIN 53735). Die entsprechenden mechanischen Eigenschaften und die Kornverteilung des entstandenen Copolymerisats sind der nachstehenden Tabelle zu entnehmen. Der Titangehalt im erfindungsgemäßen Copolymerisat betrug 2 ppm, der von Magnesium 3,7 ppm und der von Chlor 11 ppm.

Beispiel 3

Entsprechend Beispiel 1 wurden mit Hilfe eines Ziegler-Natta-Katalysator-Systems Propylen und Ethylen polymerisiert, jedoch pro mmol der Aluminiumkomponente 0,7 mmol Isopropanol verwendet. Im zweiten Reaktor erfolgte die Polymerisation bei einem Druck von 20 bar und bei einer Temperatur von 60 °C. Das Verhältnis der Partialdrücke zwischen Propylen und Ethylen betrug dabei 2,33 : 1. Das Gewichtsverhältnis zwischen dem im ersten Reaktor gebildeten Polypropylen und dem im zweiten Reaktor entstandenen Copolymerisat lag bei 2 : 1.

Dabei erhielt man ein Propylen-Ethylen-Copolymerisat mit einem Schmelzindex von 2,0 g/10 min, bei 230 °C und 2,16 kg (nach DIN 53735). Die entsprechenden mechanischen Eigenschaften und die Kornverteilung des entstandenen Copolymerisats sind der nachstehenden Tabelle zu entnehmen. Der Titangehalt im erfindungsgemäßen Copolymerisat betrug 2 ppm, der von Magnesium 3,3 ppm und der von Chlor 8 ppm.

Beispiel 4

Entsprechend Beispiel 1 wurde im ersten Reaktor Propylen polymerisiert und dieses zusammen mit dem Katalysator in den zweiten Rührautoklaven übergeführt. Dort wurde dem Propylenhomopolymerisat bei einem Gesamtdruck von 11 bar, einer Temperatur von 35 °C und einer mittleren Verweilzeit von 3 Stunden ein Gemisch von Propylen und Ethylen hinzupolymerisiert. Das Verhältnis der Partialdrücke zwischen Propylen und Ethylen betrug dabei 2,33 : 1. Das Gewichtsverhältnis zwischen dem im ersten Reaktor gebildeten Polypropylen und dem im zweiten Reaktor entstandenen Copolymerisat lag bei 4 : 1.

Dabei erhielt mari ein Propylen-Ethylen-Copolymerisat mit einem Schmelzflußindex von 2,5 g/10 min, bei 230 °C und 2,16 kg (nach DIN 53735). Die entsprechenden mechanischen Eigenschaften und die Kornverteilung des entstandenen Copolymerisats sind der nachstehenden Tabelle zu entnehmen. Der Titangehalt im erfindungsgemäßen Copolymerisat betrug 2 ppm, der von Magnesium 3,5 ppm und der von Chlor 10 ppm.

Tabelle 1

| | Schmelzindex (a) (230°C/2,16 kg) (g/10 min) | Kornverteilung (b) in Gew.-% <0,125 mm | 0,125-0,25 mm | 0,25-0,5 mm | 0,5-1,0 mm | 1,0-2,0 mm | >2 mm | Schüttdichte (c) g/l | Rieselfähigkeit (d) (g/s) | Kerbschlagzähigkeit (e) (kJ/m²) | Schubmodul (Steifigkeit) (f) (N/mm²) |
|---|---|---|---|---|---|---|---|---|---|---|---|
| Polymerisat aus der erste Polymerisationszone | 4,5 | 0,1 % | 0,7 % | 4,0 % | 31,5 % | 56,7 % | 7,0 % | 410 | 49,3 | - | 820 |
| Endprodukt aus Beispiel 1 | 2,5 | 0 % | 0,5 % | 3,5 % | 27,0 % | 59,8 % | 9,2 % | 430 | 45,5 | 7,1 | 515 |
| Endprodukt aus Beispiel 2 | 3,4 | 0 % | 0,7 % | 3,5 % | 26,9 % | 40,0 % | 8,9 % | 433 | 47,6 | 2,4 | 660 |
| Endprodukt aus Beispiel 3 | 2,0 | 0 % | 0,1 % | 3,8 % | 29,1 % | 57,2 % | 9,8 % | 422 | 43,5 | ohne Bruch | 310 |
| Endprodukt aus Beispiel 4 | 2,5 | 0 % | 0,4 % | 3,3 % | 27,1 % | 60,2 % | 9,0 % | 430 | 45,5 | 7,6 | 500 |

(a) nach DIN 53 735
(b) durch Siebanalyse
(c) nach DIN 53 466
(d) nach DIN 53 492
(e) nach DIN 53 453, bei -20°C
(f) nach DIN 53 445

In den folgenden Beispielen 5-10 wird die Herstellung von Copolymerisaten mit einer verringerten Neigung zum Weißbruch beschrieben.

Beispiel 5

Die Herstellung der erfindungsgemäßen Propylen-Ethylen-Copolymerisate erfolgte in zwei hintereinander geschalteten Rührautoklaven mit einem Nutzvolumen von jeweils 180 l in Anwesenheit von Wasserstoff als Molekulargewichtsregler. Beide Regler enthielten ein bewegtes Festbett aus feinteiligem Polypropylen.

In den ersten Polymerisationsreaktor wurde bei einem Druck von 32 bar und einer Temperatur von 80°C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug 3 Stunden. Bei diesem Verfahren wurden pro mmol der Aluminiumverbindung 0,4 kg Polypropylen erzeugt. Die titanhaltige Feststoffkomponente wurde nach folgendem Verfahren hergestellt.

Dazu versetzte man in einer ersten Stufe $SiO_2$, welches einen Teilchendurchmesser von 20 bis 45 $\mu$m, ein Porenvolumen von 1,75 $cm^3/g$ und eine Oberfläche von 320 $m^2/g$ aufwies, mit in n-Heptan gelöstem Butyl-octylmagnesium, wobei pro Mol $SiO_2$ 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gew.-%igen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Das im ersten Reaktor gebildete Polypropylen wurde zusammen mit dem Katalysator in den zweiten Rührautoklaven übergeführt und dort dem Polymerisat bei einem Gesamtdruck von 15 bar, einer Temperatur von 70°C und einer mittleren Verweilzeit von 2,5 Stunden in Anwesenheit von 75 mmol Isopropanol ein Gemisch von Propylen und Ethylen hinzupolymerisiert. Das Verhältnis der Partialdrücke zwischen Propylen und Ethylen betrug dabei 1,9:1. Das Gewichtsverhältnis zwischen dem im ersten Reaktor gebildeten Polypropylen und dem im zweiten Reaktor entstandenen Copolymerisat lag bei 7,7:1. Bei der Polymerisation wurden im zweiten Reaktor pro mmol der Aluminiumkomponente 1,25 mmol Isopropanol verwendet.

Dabei erhielt man ein Propylen-Ethylen-Copolymerisat mit einem Schmelzflußindex von 2,8 g/10 min, bei 230°C und 2,16 kg (nach DIN 53 735), sowie eine Schüttdichte von 420 g/l (nach DIN 53 466). Die entsprechenden Werte für das aus der ersten Polymerisationsstufe erhaltene Polypropylen können zusammen mit den mechanischen Eigenschaften und den Rückständen an Katalysatorresten des erhaltenen Copolymerisats der nachstehenden Tabelle 3 entnommen werden.

Beispiel 6

Entsprechend Beispiel 5 wurden mit Hilfe eines Ziegler-Natta-Katalysators Propylen und Ethylen polymerisiert, jedoch pro mmol der Aluminiumkomponente 1,3 mmol Isopropanol verwendet und die Reaktionstemperatur in der zweiten Polymerisationsstufe anstelle von 70°C auf 75°C erhöht. Die übrigen Reaktionsbedingungen können der Zusammenstellung von Tabelle 2 entnommen werden.

Dabei erhielt man ein Propylen-Ethylen-Copolymerisat mit einem Schmelzflußindex von 2,7 g/10 min (nach DIN 53 735), sowie eine Schüttdichte von 425 g/l (nach DIN 53 466). Die entsprechenden Werte für das aus der ersten Polymerisationsstufe erhaltene Polypropylen können zusammen mit den mechanischen Eigenschaften und den Rückständen an Katalysatorresten des erhaltenen Copolymerisats der nachstehenden Tabelle 3 entnommen werden.

Beispiele 7-10

Entsprechend Beispiel 5 wurden mit Hilfe eines Ziegler-Natta-Katalysators Propylen und Ethylen polymerisiert, wobei entweder die Temperatur, der Druck, das Verhältnis Isopropanol zur Aluminiumkomponente, das Verhältnis zwischen dem Partialdruck Von Propylen zum Partialdruck von Ethylen und das Verhältnis zwischen dem Umsatz in der ersten zu dem in der zweiten Polymerisationszone verändert wurden. Die genauen Reaktionsbedingungen können der nachfolgenden Tabelle 2 entnommen werden. Die Eigenschaften der nach der ersten und der nach der zweiten Polymerisationsstufe erhaltenen Polymerisate sind in der nachstehenden Tabelle 3 aufgeführt.

Tabelle 2

| | Beispiele 5 | 6 | 7 | 8 | 9 | 10 |
|---|---|---|---|---|---|---|
| **erste Polymerisationsstufe** | | | | | | |
| Temperatur [°C] | 80 | 80 | 80 | 80 | 80 | 80 |
| Druck [bar] | 32 | 32 | 32 | 32 | 32 | 32 |
| **zweite Polymerisationsstufe** | | | | | | |
| Temperatur [°C] | 70 | 75 | 70 | 75 | 70 | 75 |
| Druck [bar] | 15 | 15 | 15 | 15 | 20 | 20 |
| Verhältnis des Umsatzes in der ersten zum Umsatz in der zweiten Polymerisationsstufe | 7,7 : 1 | 7,7 : 1 | 4,5 : 1 | 4,6 : 1 | 1,8 : 1 | 1,8 : 1 |

Tabelle 2 ff.

| | Beispiele 5 | 6 | 7 | 8 | 9 | 10 |
|---|---|---|---|---|---|---|
| Verhältnis der Partialdrücke zwischen Propylen und Ethylen | 1,9 : 1 | 1,9 : 1 | 2,3 : 1 | 2,3 : 1 | 2,3 : 1 | 2,3 : 1 |
| Verhältnis mmol Isopropanol: mmol Aluminium-Komponente | 1,25 : 1 | 1,3 : 1 | 1 : 1 | 1,05 : 1 | 0,85 : 1 | 0,9 : 1 |

Tabelle 3

| | Beispiele 5 | 6 | 7 | 8 | 9 | 10 |
|---|---|---|---|---|---|---|
| <u>nach der ersten Polymerisationsstufe</u> | | | | | | |
| Schmelzindex a) [g/10 min] | 5,2 | 5,3 | 5,5 | 5,4 | 9,9 | 10,2 |
| Schüttdichte b) [g/l] | 400 | 395 | 405 | 390 | 405 | 400 |
| <u>nach der zweiten Polymerisationsstufe</u> | | | | | | |
| Schmelzindex a) [g/10 min] | 2,8 | 2,7 | 2,2 | 2,3 | 2,3 | 2,2 |
| Schüttdichte b) [g/l] | 420 | 425 | 430 | 435 | 420 | 425 |
| Weißbruch c) [mm] | 13,9 | 13,8 | 14,0 | 13,9 | 12,0 | 11,9 |
| Kerbschlagzähigkeit d) [kJ/mm²] | 3,3 | 3,2 | 6,3 | 6,4 | 100 %*) | 100 %*) |

*)

Tabelle 3 ff.

| | Beispiele 5 | 6 | 7 | 8 | 9 | 10 |
|---|---|---|---|---|---|---|
| Steifigkeit e) [N/mm2] | 620 | 625 | 520 | 525 | 330 | 325 |
| Katalysatorrückstände | | | | | | |
| Chlor [ppm] | <13 | <13 | <13 | <13 | <13 | <13 |
| Titan [ppm] | <2 | <2 | <2 | <2 | <2 | <2 |

(a) nach DIN 53 735, bei 230°C und 2,16 kg
(b) nach DIN 53 466
(c) bei 23°C, Beschreibung auf Seite 19
(d) nach DIN 53 453, bei -20°C
(e) nach DIN 53 445
(*) angebrochen

Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250 °C und einer Werkzeugoberflächentemperatur von 30 °C spritzgegossen.

Die Prüfung erfolgte bei einer Temperatur von 23 °C, wobei jeder Probekörper nur jeweils einem Stoßversuch unterworfen wurde. Dabei wurde zunächst der Probekörper auf einen Auflagering gelegt, ohne

daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

**Patentansprüche**
**Patentansprüche für folgende Vertragsstaaten : AT, BE, DE, FR, GB, IT, NL**

1. Verfahren zur Herstellung von Propylen-Ethylen-Copolymerisaten in einem bewegten Festbett, wobei man aus der Gasphase heraus zunächst in einer ersten Polymerisationsstufe bei einem Druck von 20 bis 40 bar, einer Temperatur von 60 bis 90 °C und einer mittleren Verweilzeit des Reaktionsgemisches von 1 bis 5 Stunden, mit Hilfe eines Ziegler-Natta-Katalysatorsystems, das neben einer titanhaltigen Feststoffkomponente, welche einen feinteiligen Träger der Formel $SiO_2 \cdot aAl_2O_3$ aufweist, wobei a für einen Wert von 0 bis 2 steht, noch als Cokatalysator eine Aluminiumverbindung enthält, pro mmol der Aluminiumverbindung 0,5 bis 2 kg Polypropylen erzeugt, und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat ein Gemisch aus Ethylen und Propylen hinzupolymerisiert, dadurch gekennzeichnet, daß man das Verhältnis der Partialdrücke zwischen Propylen und Ethylen im Bereich von 0,5 : 1 bis 5 : 1 einstellt und die Polymerisation in der zweiten Polymerisationsstufe in Gegenwart eines $C_1$-$C_8$-Alkanols vornimmt, wobei das Gewichtsverhältnis zwischen den in der ersten und den in der zweiten Polymerisationssstufe umgesetzten Monomeren 1 : 1 bis 20 : 1 beträgt.

2. Verfahren nach Anspruch 1, dadurch gekennzeichnet, daß man die Polymerisation in der zweiten Polymerisationsstufe in Gegenwart eines $C_1$-$C_4$-Alkanols vornimmt.

3. Verfahren nach einem der Ansprüche 1 oder 2, dadurch gekennzeichnet, daß man die Polymerisation in der zweiten Polymerisationsstufe bei Temperaturen von 70 bis 100 °C vornimmt.

**Patentansprüche für folgenden Vertragsstaat : ES**

1. Verfahren zur Herstellung von Propylen-Ethylen-Copolymerisaten in einem bewegten Festbett, wobei man aus der Gasphase heraus zunächst in einer ersten Polymerisationsstufe bei einem Druck von 20 bis 40 bar, einer Temperatur von 60 bis 90 °C und einer mittleren Verweilzeit des Reaktionsgemisches von 1 bis 5 Stunden, mit Hilfe eines Ziegler-Natta-Katalysatorsystems, das neben einer titanhaltigen Feststoffkomponente, welche einen feinteiligen Träger der Formel $SiO_2 \cdot aAl_2O_3$ aufweist, wobei a für einen Wert von 0 bis 2 steht, noch als Cokatalysator eine Aluminiumverbindung enthält, pro mmol der Aluminiumverbindung 0,05 bis 2 kg Polypropylen erzeugt, und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 100 °C und einer mittleren Verweilzeit des Reaktionsgemisches von 1 bis 5 Stunden, dem aus der ersten Polymerisationsstufe ausgebrachten Polymerisat ein Gemisch aus Ethylen und Propylen hinzupolymerisiert, dadurch gekennzeichnet, daß man das Verhältnis der Partialdrücke zwischen Propylen und Ethylen im Bereich von 0,5 : 1 bis 5 : 1 einstellt und die Polymerisation in der zweiten Polymerisationsstufe in Gegenwart eines $C_1$-$C_8$-Alkanols vornimmt, wobei das Gewichtsverhältnis zwischen den in der ersten und den in der zweiten Polymerisationsstufe umgesetzten Monomeren 1 : 1 bis 20 : 1 beträgt.

2. Verfahren nach Anspruch 1, dadurch gekennzeichnet, daß man die Polymerisation in der zweiten Polymerisationsstufe in Gegenwart eines $C_1$-$C_4$-Alkanols vornimmt.

3. Verfahren nach einem der Ansprüche 1 oder 2, dadurch gekennzeichnet, daß man die Polymerisation in der zweiten Polymerisationsstufe beim Temperaturen von 70 bis 100 °C vornimmt.

## Claims

### Claims for the following Contracting States : AT, BE, DE, FR, GB, IT, NL

1. A process for the preparation of a propylene-ethylene copolymer in an agitated fixed bed, from 0.5 to 2 kg of polypropylene being produced from the gas phase per mmol of the aluminum compound in a first polymerization step at a pressure of from 20 to 40 bar, and at from 60 to 90 °C and at a mean residence time of the reaction mixture of from 1 to 5 hours, using a Ziegler-Natta catalyst system which, in addition to a titanium-containing solid component having a finely divided carrier of the formula $SiO_2 \cdot aAl_2O_3$, where A is from 0 to 2, also contains, as cocatalyst, an aluminum compound, and a mixture of ethylene and propylene being addition polymerized onto the polymer discharged from the first polymerization step in a second polymerization step at a pressure of from 5 to 30 bar, this pressure being 7 bar or more below the pressure of the first polymerization step, at from 30 to 100 °C and at a mean residence time of the reaction mixture of from 1 to 5 hours, which comprises setting the ratio between the partial pressures of propylene and ethylene in the range from 0.5:1 to 5:1 and carrying out the polymerization in the second polymerization step in the presence of a $C_1$-$C_8$-alkanol, the weight ratio between the monomers reacted in the first polymerization step and those reacted in the second polymerization step being from 1:1 to 20:1.

2. A process as claimed in claim 1, which comprises carrying out the polymerization in the second polymerization step in the presence of a $C_1$-$C_4$-alkanol.

3. A process as claimed in claim 1 or 2, wherein the polymerization in the second polymerization step is carried out at from 70 to 100 °C.

### Claims for the following Contracting State : ES

1. A process for the preparation of a propylene-ethylene copolymer in an agitated fixed bed, from 0.05 to 2 kg of polypropylene being produced from the gas phase per mmol of the aluminum compound in a first polymerization step at a pressure of from 20 to 40 bar, and at from 60 to 90 °C and at a mean residence time of the reaction mixture of from 1 to 5 hours, using a Ziegler-Natta catalyst system which, in addition to a titanium-containing solid component having a finely divided carrier of the formula $SiO_2 \cdot aAl_2O_3$, where A is from 0 to 2, also contains, as cocatalyst, an aluminum compound, and a mixture of ethylene and propylene being addition polymerized onto the polymer discharged from the first polymerization step in a second polymerization step at a pressure of from 5 to 30 bar, this pressure being 7 bar or more below the pressure of the first polymerization step, at from 30 to 100 °C and at a mean residence time of the reaction mixture of from 1 to 5 hours, which comprises setting the ratio between the partial pressures of propylene and ethylene in the range from 0.5:1 to 5:1, and carrying out the polymerization in the second polymerization step in the presence of a $C_1$-$C_8$-alkanol, the weight ratio between the monomers reacted in the first polymerization step and those reacted in the second polymerization step being from 1:1 to 20:1.

2. A process as claimed in claim 1, which comprises carrying out the polymerization in the second polymerization step in the presence of a $C_1$-$C_4$-alkanol.

3. A process as claimed in claim 1 or 2, wherein the polymerization in the second polymerization step is carried out at from 70 to 100 °C.

## Revendications

### Revendications pour les Etats contractants suivants : AT, BE, DE, FR, GB, IT, NL

1. Procédé de préparation de copolymères propylène/éthylène en lit de solides mis en mouvement, dans lequel on commence par produire à partir de la phase gazeuse, dans une première étape de polymérisation sous une pression de 20 à 40 bar, à une température de 60 à 90 °C et avec une durée moyenne de séjour du mélange réactionnel de 1 à 5 h, à l'aide d'un système catalytique de Ziegler-Natta qui contient un composé de l'aluminium en tant que co-catalyseur, en plus d'un composant solide au titane qui comporte un support finement divisé de formule $SiO_2.aAl_2O_3$ (a étant mis pour un nombre de 0 à 2), de 0,5 à 2 kg de polypropylène par mmole du composé de l'aluminium et, dans une seconde étape de polymérisation sous une pression de 5 à 30 bar, cette pression étant inférieure d'au

moins 7 bar à la pression de la première étape de polymérisation, à une température de 30 à 100°C et avec une durée moyenne de séjour du mélange réactionnel de 1 à 5 h, on polymérise additionnellement un mélange d'éthyléne et de propylène sur le polymère provenant de la première étape de polymérisation, caractérisé en ce qu'on règle dans la gamme de 0,5 : 1 à 5 : 1 le rapport des pressions partielles entre le propylène et l'éthylène et on conduit la polymérisation, dans la seconde étape de polymérisation, en présence d'un alcanol en $C_1$-$C_8$, le rapport pondéral entre les monomères mis en réaction dans la première étape de polymérisation et dans la seconde étape étant compris entre 1 : 1 et 20 : 1.

2. Procédé selon la revendication 1, caractérisé en ce que, dans la seconde étape de polymérisation, on mène la polymérisation en présence d'un alcanol en $C_1$-$C_4$.

3. Procédé selon la revendication 1 ou 2, caractérisé en ce que, dans la seconde étape de polymérisation, on mène la polymérisation à des températures de 70 à 100°C.

**Revendications pour l'Etat contractant suivant : ES**

1. Procédé de préparation de copolymères propylène/éthylène en lit de solides mis en mouvement, dans lequel on commence par produire à partir de la phase gazeuse, dans une première étape de polymérisation sous une pression de 20 à 40 bar, à une température de 60 à 90°C et avec une durée moyenne de séjour du mélange réactionnel de 1 à 5 h, à l'aide d'un système catalytique de Ziegler-Natta qui contient un composé de l'aluminium en tant que co-catalyseur, en plus d'un composant solide au titane qui comporte un support finement divisé de formule $SiO_2.aAl_2O_3$ (a étant mis pour un nombre de 0 à 2), de 0,05 à 2 kg de polypropylène par mmole du composé de l'aluminium et, dans une seconde étape de polymérisation sous une pression de 5 à 30 bar, cette pression étant inférieure d'au moins 7 bar à la pression de la première étape de polymérisation, à une température de 30 à 100°C et avec une durée moyenne de séjour du mélange réactionnel de 1 à 5 h, on polymérise additionnellement un mélange d'éthylène et de propylène sur le polymère provenant de la première étape de polymérisation, caractérisé en ce qu'on règle dans la gamme de 0,5 : 1 à 5 : 1 le rapport des pressions partielles entre le propylène et l'éthylène et on conduit la polymérisation, dans la seconde étape de polymérisation, en présence d'un alcanol en $C_1$-$C_8$, le rapport pondéral entre les monomères mis en réaction dans la première étape de polymérisation et dans la seconde étape étant compris entre 1 : 1 et 20 : 1.

2. Procédé selon la revendication 1, caractérisé en ce que, dans la seconde étape de polymérisation, on mène la polymérisation en présence d'un alcanol en $C_1$-$C_4$.

3. Procédé selon la revendication 1 ou 2, caractérisé en ce que, dans la seconde étape de polymérisation, on mène la polymérisation à des températures de 70 à 100°C.